# EUROPEAN PATENT APPLICATION

(11) **EP 4 418 424 A1**
(43) Date of publication of application: **21.08.2024**
(21) Application number: 22880698.0
(22) Date of filing: 13.09.2022
(51) Int. Cl.: H01M 50/256, H01G 11/78, H01M 50/202, H01M 50/204

(54) **POWER STORAGE DEVICE TRANSPORT CONTAINER AND METHOD FOR TRANSPORTING POWER STORAGE DEVICE USING SAME**

(30) Priority: 13.10.2021 JP 2021168210
(71) Applicant: Kurita Water Industries Ltd., Tokyo 164-0001 (JP)
(72) Inventor: YAGI Minoru, Tokyo 164-0001 (JP)
(74) Representative: TBK
(86) International application number: PCT/JP2022/034182
(87) International publication number: WO 2023/063002

(57) **Abstract**

This power storage device transport container has a structure in which a compact containing an acrylic-based polymer is disposed in a gap between a power storage device and the transport container. This compact is preferably film-shaped, sheet-shaped, or plate-shaped. With such a power storage device transport container, it is possible to reduce the risk of ignition in the event of damage to a power storage device or a power storage device stack in which a plurality of power storage devices are stacked, or an abnormality such as a high-temperature environment.

## Description

### Technical Field

The invention relates to a transport container for transporting or moving a power storage device, such as a lithium-ion battery, a lithium-ion capacitor, an electric double-layer capacitor, or the like, encased therein, and a method for transporting the power storage device using the transport container. In particular, the invention relates to a power storage device transport container and a transport method capable of reducing a risk of fire spreading outside of the container even if the power storage device ignites in an abnormality such as damage or high-temperature environment.

### Related Art

In recent years, as power sources for high-output portable devices, electric vehicles or the like, power storage devices such as secondary batteries, lithium-ion capacitors, and electric double-layer capacitors are used, in which power storage devices using non-aqueous electrolytes are accommodated in casings.

In general, when such power storage devices are transported or moved in a container, they are usually transported or moved with a low state of charge (SOC) (such as 30% or less) as a charged state. However, even when the charged state is low, they are at a risk of ignition or explosion due to short circuits caused by external factors or being left in high-temperature environments.

As a technique for preventing the power storage device from igniting, for example, a method has been proposed in which gas generated inside a lithium-ion battery is absorbed by a combustible gas absorbing material so as to prevent the battery from bursting (Patent Documents 1 and 2).

On the other hand, a method has also been proposed in which a fire extinguishing agent is disposed inside a lithium-ion battery so as to lower the temperature of the gas released to the outside when a safety valve opens due to increase in internal pressure caused by gas generation inside the battery (Patent Document 3). Further, a method for prevent ignition caused by gas generated from the lithium-ion battery by disposing a porous material with incombustible gas, water-based solvent or incombustible solvent adsorbed in pores and surfaces inside the lithium-ion battery is also proposed (Patent Document 4).

### Prior-Art Document

### Patent Document

[Patent Document 1] Japanese Patent Laid-open No. 2001-155790
[Patent Document 2] Japanese Patent Laid-open No. 2003-077549
[Patent Document 3] Japanese Patent Laid-open No. 2010-287488A
[Patent Document 4] Japanese Patent Laid-open No. 2013-187089A

### SUMMARY OF THE INVENTION

### Problem to be solve by the Invention

However, because a large amount of gas is instantaneously generated in an event of electrical abnormality or thermal runaway of a power storage device, the method of disposing a gas adsorbent in the power storage device as described in Patent Documents 1 and 2 is insufficient for the limited space of the power storage device in terms of both the amount of gas adsorption and the gas adsorption rate, and the ejection of gas from the power storage device cannot be completely suppressed. Moreover, in the method of disposing a fire extinguishing agent so as to lower the temperature inside a lithium-ion battery or disposing a porous material with incombustible gas, water-based solvent or incombustible solvent adsorbed in pores and surfaces inside the power storage device as described in Patent Documents 3 and 4, there is a problem in that if the gas adsorption amount is insufficient, the effect cannot be fully exerted, and the ejection of gas cannot be completely suppressed.

Due to these problems, when power storage devices are transported or moved in the container, the technologies described in Patent Documents 1 to 4 were not sufficiently effective in preventing fire from spreading to external environment by suppressing ignition or explosion due to short circuits caused by external factors or due to the power storage devices being left in high-temperature environment.

The invention has been made in view of the above problems, and the purpose of the invention is to provide a power storage device transport container capable of reducing the risk of fire spreading to outside of the container when damage to a power storage device or an abnormality such as high-temperature environment or the like occurs, when transporting or moving encased power storage device or a plurality of power storage devices, and a transport method using the transport container.

### Means for solving the Problem

In order to solve the above problems, the invention first provides a power storage device transport container, in which a compact containing an acrylic-based polymer is disposed in a gap between a power storage device and a transport container body that accommodates the power storage device (Invention 1). In particular, in the above invention (Invention 1), it is preferable that the power storage device uses a non-aqueous electrolyte (Invention 2).

According to such inventions (Inventions 1 and 2), by disposing a compact containing an acrylic-based polymer in a space between the power storage device and the power storage device transport container body, the risk of fire spreading to the outside of the transport container can be reduced in an event abnormality such as damage to the power storage device or high-temperature environment.

In the above inventions (Inventions 1 and 2), it is preferable that the compact containing the acrylic-based polymer contains 10% by weight or more of the acrylic-based polymer as a whole (Invention 3).

According to such invention (Invention 3), the effect of preventing fire from spreading to the outside of the transport container can be suitably exerted when an abnormality occurs in the power storage device.

In the above inventions (Inventions 1 to 3), it is preferable that the acrylic-based polymer is a homopolymer or a copolymer synthesized with one or more types of (meth)acrylic acid alkyl esters as a monomer, a polyacrylonitrile synthesized with a acrylonitrile as a monomer, or a copolymer of the (meth)acrylic acid alkyl esters or the acrylonitrile and one or more types of other monomers (Invention 4).

In the above inventions (Inventions 1 to 4), it is preferable that the compact containing the acrylic-based polymer is film-shaped, sheet-shaped, or plate-shaped (Invention 5).

According to such invention (Invention 5), by making the compact containing acrylic-based polymers in film-shaped, sheet-shaped, or plate-shaped, it may be attached to the inner wall of a transport container, inserted into a gap part, or forming a partition structure, allowing for a wide variety of arrangement variations and improved handling properties.

In the above invention (Invention 5), it is preferable that the film-shaped, sheet-shaped, or plate-shaped compact containing the acrylic-based polymer has a thickness of 1µm to 5000µm (Invention 6). In particular, in the above invention (Invention 5 or 6), it is preferable that the film-shaped, sheet-shaped, or plate-shaped compact has a weight per area of 10g/m² to 2000g/m² (Invention 7).

According to such inventions (Inventions 6 and 7), by disposing a film-shaped, sheet-shaped, or plate-shaped compact with a predetermined thickness and weight in the gap between the power storage device and the transport container, when an abnormality occurs in the power storage device, the effect of preventing fire from spreading to the outside of the transport container can be suitably exerted.

In the above inventions (Inventions 1 to 7), a plurality of the power storage devices may be stacked (Invention 8).

The above invention (Invention 8) can be particularly suitably applied to a power storage device stack because in the power storage device stack, if there is an abnormality in one power storage device, even if combustible gas is ejected from the power storage device and flows out of the space of the transport container, the material of the compact containing the acrylic-based polymer has an effect on the combustible gas, which can significantly reduce the risk of fire spreading to the outside of the transport container.

Secondly, the invention provides a method for transporting power storage device, in which a power storage device is accommodated and transported in a power storage device transport container in which a compact containing an acrylic-based polymer is disposed in a gap between the power storage device and a transport container body that accommodates the power storage device (Invention 9).

According to such invention (Invention 9), by disposing a compact containing an acrylic-based polymer in the space between the power storage device and the power storage device transport container body, in the event of an abnormality such as damage to the power storage device or high-temperature environment, the power storage device may be transported with the risk of fire spreading to the outside of the transport container reduced.

### Effects of Invention

In the power storage device transport container of the invention, since a compact containing an acrylic-based polymer is disposed in the gap between the power storage device and the transport container body, by the effect of the acrylic-based polymer on the high-temperature ejected matter or ejected gas discharged from the power storage device due to short circuits or the like of the power storage device, the risk of ignition of the power storage device transport container can be significantly reduced by.

### DESCRIPTION OF THE EMBODIMENTS

The power storage device transport container of the invention will be described in detail based on the following embodiments.

### (Power storage device transport container]

The power storage device transport container of the embodiment has a structure in which a compact containing an acrylic-based polymer is disposed in a gap between a region in a transport container body that accommodates the power storage device, where the power storage device is accommodated, and the container body.

### (Power storage device)

In the embodiment, the power storage device is not particularly limited, and either a primary battery or a secondary battery may be used, but a secondary battery is preferable. There are no particular restrictions on the type of secondary battery, for example, lithium-ion batteries, lithium-ion polymer batteries, all-solid-state batteries, lead batteries, nickel-hydrogen batteries, nickel-cadmium batteries, nickel-iron batteries, nickel-zinc storage batteries, silver oxide-zinc batteries, metal-air batteries, polyvalent cation batteries, condensers, capacitors, or the like may be used. Among which, those using non-aqueous electrolytes may be suitably used. In the secondary batteries, lithium-ion batteries, lithium-ion polymer batteries, lithium-ion capacitors, all-solid-state batteries or the like may be suitably used for the suitable battery material of the invention.

The above power storage device may be in a form of a power storage device stack in which a plurality of power storage devices are stacked.

### (Power storage device transport container body)

In the embodiment, the transport container body is not particularly limited as long as it may enclose the above power storage device (power storage device stack) with a gap, and various materials, such as synthetic resin and metal may be used. The transport container body is generally rectangular box-shaped, but is not limited thereto. The transport container body is preferably provided with a release valve or a release hole, such that ejected gas or ejected matter discharged from the power storage device is discharged to the outside of the transport container when there is an abnormality in the power storage device.

### (Ignition-prevention material)

In the embodiment, a compact containing an acrylic-based polymer is disposed as an ignition-prevention material provided in the gap between the power storage device and the transport container body.

Examples of the above acrylic-based polymers include an acrylic-based polymer (homopolymers or copolymers) synthesized with one or more types of (meth)acrylic acid alkyl esters as a monomer. Another example is a polyacrylonitrile synthesized with an acrylonitrile as a monomer. Further examples include copolymers of the (meth)acrylic acid alkyl esters or the acrylonitrile and one or more types of other monomers.

Specific examples of the above (meth)acrylic acid alkyl esters include methyl methacrylate, ethyl methacrylate, n-propyl methacrylate, isopropyl methacrylate, n-butyl methacrylate, tert-butyl methacrylate, sec-butyl methacrylate, and isobutyl methacrylate, but are not limited thereto.

The other monomers that copolymerize with the monomers used in the above acrylic-based polymer include other (meth)acrylic acid alkyl esters, acrylonitrile, acrylamide, vinyl acetate, vinyl chloride, vinylidene chloride, and styrene, but not limited thereto. The amount of the other monomers is preferably 90% by weight or less, particularly about 40% by weight or less, of the total 100% by weight of the monomer used in the acrylic-based polymer and other monomers. If the amount of the other monomers is too large, the effect of reducing the ignition risk of the power storage device transport container will not be sufficient.

The acrylic-based polymer may further contain various commonly used additives within a range that does not impair the effects of the invention. Examples of additives include crosslinked rubber particles, ultraviolet absorbers, slip agents, antioxidants, mold release agents, antistatic agents, flame retardants, and the like. Further, the surface of the acrylic-based polymer may be coated with a material for enhancing functionality to such an extent that the effect of the invention is not impaired.

The above ignition-prevention materials may be used alone or in combination of two or more types.

Further, these ignition-prevention materials may also be used by adding materials having a cooling effect by heat transfer and absorption, an effect of suppressing combustion radical reactions, or a flame-extinguishing effect of making a flame unstable on the surface of the adsorbent on the ejected matter and the ejected gas from the power storage device.

In the embodiment, the compact of ignition-prevention material disposed in the gap between the power storage device and the transport container is not particularly limited in shape, but considering the ease of handling when being arranged in the gap between the power storage device and the transport container, it is preferable to be film-shaped, sheet-shaped, or plate-shaped. By making the ignition-prevention material to be film-shaped, sheet-shaped, or plate-shaped, it may be arranged in a wide variety of ways, such as attached inside the casing of a transport container, inserted into a gap part, or forming a partition structure, allowing for a wide variety of arrangement variations and improved handling properties.

### [Method for transporting power storage device]

The above power storage device and transport container may be transported by disposing a compact of ignition-prevention material in the transport container body in advance, then accommodating the power storage device with, for example, a state of charge (SOC) of about 30% and sealing the transport container, or may be transported by accommodating the power storage device in the transport container body, then disposing a compact of ignition-prevention material in a gap and sealing the transport container.

By accommodating and transporting the power storage device in the transport container according to the embodiment, even if the power storage device ignites due to a short circuit caused by external factors or for being left in a high-temperature environment, a compact of ignition-prevention material is provided such that while the power storage device is being transported or moved in the container, the spreading of fire within the transport container can be prevented even if ignition or explosion occurs due to a short circuit caused by external factors or for being left in a high-temperature environment, thus the risk of fire spreading to the outside of the transport container can be reduced.

The power storage device transport container of the invention has been described above, but the invention only requires that a compact containing an acrylic-based polymer be disposed in the gap between the power storage device (power storage device stack) and the transport container body, and the size, shape, or the like of the power storage device (power storage device stack) are not particularly limited. Thus, the invention can be applied to power storage devices for various uses, such as power storage devices (power storage device stacks) of a wide range of sizes, from smartphones to in-vehicle devices.

### [Example]

The invention will be explained in more detail based on the following specific examples, but the invention is not limited to the following examples.

### [Nail penetration test]

### (Comparative example 1)

A PP resin container intended as a power storage device transport container (an open top container with inner diameter of width 80mm × length 105mm × depth 34mm and resin thickness of 2mm, with an electrode side of aluminum laminated lithium-ion battery disposed on the width 80mm side, and with five holes of 10mm in diameter on the with 80mm side) was prepared. A 1500mAh aluminum laminated lithium-ion battery (width 35mm, length 75mm) of ternary positive electrode material was placed inside the PP resin container in a fully charged state, covered with a PP resin plate with a resin thickness of 4mm from above, and a peripheral edge of the cover was sealed with no gap by a heat-resistant tape, such that ejected matter from the lithium-ion battery due to overcharge was only discharged through the five open holes.

A PP resin container intended as a transport container (an open top container with inner diameter of width 98mm × length 148mm × depth 48mm and resin thickness of 2mm, and with five holes of 10 mm in diameter on the width 98mm side (a container with openings on the opposite side of the openings of the PP resin container intended as a container for the power storage device)) was disposed outside the PP resin container intended as a container for the power storage device, covered with a PP resin plate with a thickness of 4mm from above, and a peripheral edge of the cover was sealed with no gap by a heat-resistant tape, such that ejected matter of the battery in a nail penetration test was discharged only from the five open holes. Thus, a power storage device transport container was provided.

When the nail penetration test was conducted on the power storage device transport container, the battery was destroyed and a violent ignition was observed on the outside of the transport container.

### (Example 1)

A power storage device transport container was configured, in which the power storage device transport container used in Comparative Example 1 was used as the transport container body, and a film-shaped compact (thickness: 125µm, weight per area: 150g/m²) of acrylic-based polymer (94% or more of polymer mainly composed of polymethyl methacrylate and 5% or less of additives) was attached to the inner surface of the container with double-sided tape over an area of 0.05m².

When a nail penetration test was conducted on the power storage device transport container under the same conditions as in Comparative Example 1, the battery was destroyed, but no ignition was observed outside the transport container.

## Claims

1. A power storage device transport container, wherein a compact containing an acrylic-based polymer is disposed in a gap between a power storage device and a transport container body that accommodates the power storage device.

2. The power storage device transport container according to claim 1, wherein the power storage device uses a non-aqueous electrolyte.

3. The power storage device transport container according to claim 1 or 2, wherein the compact containing the acrylic-based polymer contains 10% by weight or more of the acrylic-based polymer as a whole.

4. The power storage device transport container according to any one of claims 1 to 3, wherein the acrylic-based polymer is a homopolymer or a copolymer synthesized with one or more types of (meth)acrylic acid alkyl esters as a monomer, a polyacrylonitrile synthesized with a acrylonitrile as a monomer, or a copolymer of the (meth)acrylic acid alkyl esters or the acrylonitrile and one or more types of other monomers.

5. The power storage device transport container according to any one of claims 1 to 4, wherein the compact containing the acrylic-based polymer is film-shaped, sheet-shaped, or plate-shaped.

6. The power storage device transport container according to claim 5, wherein the film-shaped, sheet-shaped, or plate-shaped compact containing the acrylic-based polymer has a thickness of 1µm to 5000µm.

7. The power storage device transport container according to claim 5 or 6, wherein the film-shaped, sheet-shaped, or plate-shaped compact has a weight per area of 10g/m² to 2000g/m².

8. The power storage device transport container according to any one of claims 1 to 7, wherein a plurality of the power storage devices are stacked.

9. A method for transporting power storage device, wherein a power storage device is accommodated and transported in a power storage device transport container in which a compact containing an acrylic-based polymer is disposed in a gap between the power storage device and a transport container body that accommodates the power storage device.
